# EUROPEAN PATENT SPECIFICATION

(11) **EP 1 683 549 B1**
(45) Date of publication and mention of the grant of the patent: **17.06.2009**
(21) Application number: 05257073.6
(22) Date of filing: 16.11.2005
(51) Int. Cl.: A62D 5/00

(54) **Chemical protective fabric**
chemische Schutzgewebe
TISSU DE PROTECTION CONTRE LES PRODUITS CHIMIQUES

(30) Priority: 16.11.2004 US 628518 P
(43) Date of publication of application: 26.07.2006
(73) Proprietor: MMI-IPCO, LLC, Lawrence, MA 01842 (US)
(72) Inventor: Rock, Moshe, Brookline, MA 02446 (US)
(74) Representative: Murray, Elisabeth Anne

(56) References cited:
- EP-A- 1 468 732
- GB-A- 2 096 536
- US-A- 5 731 065
- US-A1- 2003 003 264

## Description

### TECHNICAL FIELD

This application claims benefit from U.S. Provisional Patent Application No. 60/628,518, filed November 16, 2004, now pending.

This disclosure relates to protective fabrics, and to protective garments incorporating such fabrics, and, more particularly, to chemical protective fabrics and chemical protective fabric garments.

### BACKGROUND

Currently, many military, homeland security, and first responder personnel are equipped with chemical protective cloth garments provided under the SARATOGA^{®} brand, owned by Blucher GmbH, of Dusseldorf, Germany. In one implementation, the SARATOGA chemical protective clothing system consists of a heavy, woven outer shell, formed of cotton or a cotton/nylon mix that is liquid repellent, worn over an intermediate liner consisting of a filter material formed of a breathable membrane, e.g. a nonwoven cloth, disposed atop an inner textile carrier containing activated carbon absorber. The breathable membrane, which has selective impermeability to chemical agents in a form of vapor and/or liquid, is constructed to permit limited moisture vapor transmission, but it also generates high levels of heat stress during periods of high activity by the wearer. The activated carbon absorbers used in the SARATOGA system are incorporated into fibers of the textile carrier, or, in other implementations, spherical activated carbon absorbers are adhered to the textile carrier with an adhesive binder or resin.

United Kingdom patent application GB-A-2096536 describes a protective maternal, suitable for use in clothing by which a human body is protected from poisonous chemicals, comprising a cloth layer having, on a first surface thereof e.g. bonded thereto, an active carbon layer, and in which the apparent density of the second surface, e.g. a pile stratum, of the cloth layer is less than that of the cloth layer as a whole.

### SUMMARY

According to the disclosure, a chemical protective fabric garment system comprises a knit thermal fabric layer formed of synthetic yarns or fibers with embedded particles of activated carbon, the first knit thermal fabric layer having at least one raised surface with a large surface area and high three-dimensional bulk; and an inner knit layer formed of one or more yarns made of fibers carrying activated carbon particles and having an inner surface, towards a wearer's skin, brushed for increased surface area to provide enhanced absorption and reduced touching points upon the skin.

Preferred implementations may include one or more of the following additional features. The inner knit layer has a knitting construction selected from the group consisting of single jersey, plaited jersey, double knit, rib terry, and triple plaited terry. The inner fabric layer has one or more properties selected from the group consisting of good water management, good stretch recovery, and kindness to a wearer's skin. The inner fabric layer is formed of materials with flame retarding properties. Preferably, the inner fabric layer has enhanced flame retarding properties provided, at least in part, by activated carbon particles embedded in fibers of the inner fabric layer. The inner fabric layer has high absorption performance for hazardous chemicals including in the form of gas, vapor, mist, or liquid. The knit thermal fabric layer includes fibers comprising synthetic material selected from the group consisting of acrylic, acrylonitrile, nylon, and polyester. The knit thermal fabric layer is formed by a knitting process selected from the group consisting of circular knit and warp knit. The knit thermal fabric layer is formed by the process of circular knitting and has a knitting construction selected from the group consisting of terry, terry sliver knit in regular plaiting, terry sliver knit in reverse plaiting, and sliver knit. The knit thermal fabric layer has a knitting construction selected from the group consisting of regular plaiting and reverse plaiting, and one or both surfaces are physically brushed or raised by napping, brushing or sanding. The knit thermal fabric layer has one or both surfaces finished with fleece, velour or shearling. The knit thermal fabric layer is in stand-alone or laminated form. The knit thermal fabric layer has a large surface area and high three-dimensional bulk. The knit thermal fabric layer is single face or double face. The knit thermal fabric layer defines air flow paths of high tortuosity, which, combined with Brownian movement of hazardous chemical molecules, ensures suitably high probability of contact by hazardous chemical molecules with activated carbon particles embedded in and upon fibers. Activated carbon particles are embedded in and upon one or more of stitch yarn, terry yarn and loop yarn. The knit thermal fabric layer further comprises elastomeric fibers in stitch yarn of regular plait and reverse plait constructions. The knit thermal fabric layer is formed by warp knit, with single face or double face knit or double needle bar construction. The chemical protective fabric garment system further comprises an outer protective fabric shell. The inner knit layer also has an outer surface brushed for increased surface area and for increased tortuosity of the inner knit layer.

The details of one or more implementations are set forth in the accompanying drawings and the description below. Other features, objects, and advantages will be apparent from the description and drawings, and from the claims.

### DESCRIPTION OF DRAWINGS

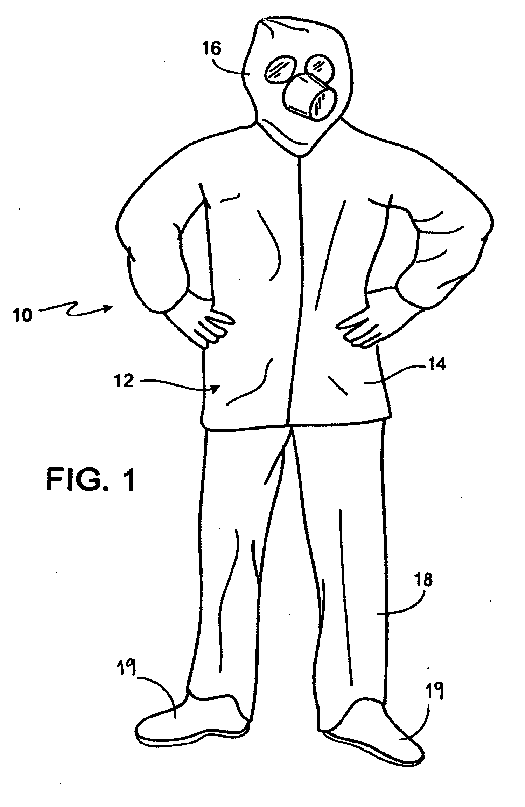

FIG. 1. is a somewhat diagrammatic view of a first responder garbed in a chemical protective fabric garment system.

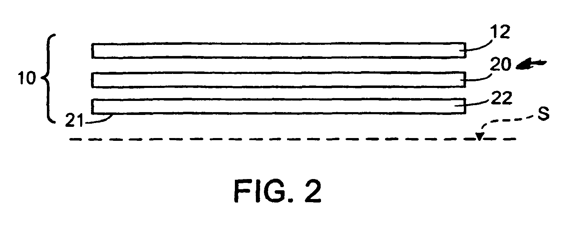

FIG. 2 is an exploded side section view of a chemical protective fabric.
Like reference symbols in the various drawings indicate like elements.

### DETAILED DESCRIPTION

The chemical protective safety fabric garment system further enhances safety with extra protection for the wearer, especially when the outer shell protective garment is bridged, e.g. when the fabric is torn, fails to fully cover the wearer, when there is a low saturation level of the activated carbon, or when the protective shell garment is saturated, with little or no additional capacity for absorption. Redundancy of protective layers and high comfort level are crucial in the present disclosure.

Referring to FIG.S. 1 and 2, a chemical protective fabric garment system 10 consists of an outer fabric shell 12, typically including a zippered, upper garment portion 14 (with an integral hood 16) and a lower garment portion 18 (extending over the uppers of the wearer's boots 19); an intermediate thermal fabric layer 20; and a first, inner fabric layer 22, all now to be described in more detail.

### Outer Fabric Shell (12)

As described above, the outer shell 12 is typically constructed of a heavy, woven fabric formed, for example, of cotton or a cotton/nylon mix, e.g. as available from Tex-Shield, Inc., of Washington, DC, as SARATOGA® permeable chemical protective clothing and fabric, or a woven fabric laminated to a selectively permeable membrane ("SPM"). The shell is designed to be repellent to liquid, including hazardous chemicals in liquid state or in a liquid carrier.

### Thermal (Intermediate) Fabric Layer (20)

In the intermediate thermal fabric layer 20, activated carbon particles are imbedded in synthetic fibers, formed, e.g., of acrylic, acrylonitrile, nylon, polyester, or other suitable material, which are spun to a textile yarn and knitted in circular knit or warp knit. In the case of circular knit, the preferred fabric construction is typically selected from among, e.g., single jersey, plaited jersey, triple plaited jersey, double knit, rib terry, terry loop in regular plaiting or reverse plaiting, and sliver knit (as described below). Terry loop fabric in regular plaiting or reverse plaiting knit construction is physically finished to form a raised surface, e.g., by napping, brushing, or sanding. The raised surface, which can be finished as fleece, velour, shearling, and may be in the form of a stand alone fabric or a laminated fabric, will have a large surface area (i.e., the sum total of the surface areas of the fibers forming the volume of the raised surface) and relatively high three-dimensional bulk.

These properties, preferably found in a fabric constructed to have high tortuosity of passageways through the fabric, combine to retard and thwart passage of hazardous chemicals through the fabric. Molecules, including molecules of hazardous chemical, in colloidal suspension are subject to "Brownian" movement (i.e. rapid movement, not in a straight line, but with irregular, rapid, random motion). The bulky, raised-surface thermal fabric layer of the protective fabric (which has relatively higher bulk with lower weight, i.e., as common to THERMALPRO® fabric and WINDPRO® fabric in the POLARTEC® fleece fabric product line manufactured and distributed by Malden Mills Industries, Inc., of Lawrence, Massachusetts, assignee of the present disclosure) resists penetration of hazardous chemical through the fabric. In particular, the high bulk-to-weight ratio, and the large surface area of the raised surface fleece, combines with the Brownian movement to ensure a high rate of absorption of the hazardous chemicals (gas, aerosol, vapor, mist or liquid) by the activated carbon particles imbedded in the fibers and on the fiber surfaces, as the narrow passageways serve to ensure that the Brownian movement of the molecules brings the hazardous chemicals into contact with the particles of activated carbon. The raised surface fabric, in single face or double face, serves also as a thermal insulation layer in cold weather conditions. This thermal insulation fabric layer 20, with enhanced tortuosity property, can be made of 100% synthetic fiber yarn containing activated carbon particles, e.g. in the sinker loop yarn and the stitch yarn, or in just the sinker loop yarn, or in just the terry yarn. All of these yarns will be raised by napping, and preferably will have relatively finer denier for increased tortuosity of passageways through the fabric layer, and increased surface area for better absorption by the activated carbon particle. The stitch yarn, which is not raised, can be made of other synthetic yarn or of natural or regenerated yarn. This knit construction may also contain elastomeric yarn in the stitch yarn where the fabric is formed of plaited or reverse plaiting construction.

Alternatively, in another implementation, the intermediate thermal fabric layer 20 may be formed with warp knit construction having high bulk-to-weight ratio in single face or double face, knitted on a double needle bar, e.g. as described in U.S. Patent No. 5,855,125.

In yet another implementation, the fabric layer 20 may be formed with sliver knit construction having high bulk-to-weight ratio. (Sliver knit is a high loft, knit fabric, e.g. resembling initiation fur, created by locking individual fibers directly into a lightweight knit backing to permit each fiber to stand upright, free from the backing).

### First (Inner) Fabric Layer (22)

A first layer garment 22, worn beneath the thermal layer 20, closer to the wearer's skin, S, is important in the layering system for further improving the redundancy of protection.

The first layer garment 22 consists of a fabric formed as a knit textile fabric, e.g. as a single jersey, plaited jersey, double knit, or rib, with or without spandex stretch yarn, where one component yarn, and/or all component yarns, are made of fibers containing activated carbon particles. The first layer will preferably still have other comfort properties, e.g. good water management, good stretch recovery, and/or kindness to the wearer's skin, while having high absorption affinity for hazardous chemicals, e.g. in gaseous, vaporous or mist, or liquid state. The inner side 21 of the textile knit fabric, i.e. as a first layer next to the wearer's skin, is brushed to reduce the touching points to the skin and to increase its surface area for enhanced absorption of hazardous chemicals. In other implementations, the textile knit fabric may be brushed on both surfaces to further increase the surface area, and to increase tortuosity of passageways through the fabric layer. As described above, yarns of relatively finer denier are preferred. The imbedded activated carbon particles will also enhance the flame-retarding performance of the yarn, especially where the material forming the yarn has some degree of flame-retarding ability.

While the present invention has been described in its preferred embodiments, it is to be understood that the words which have been used are words of description rather than limitation and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

A chemical protective fabric garment system consists of a knit thermal fabric layer formed of synthetic yarns or fibers with embedded particles of activated carbon and an inner knit layer formed of one or more yarns made of fibers carrying activated carbon particles. The first knit thermal fabric layer has at least one raised surface with a large surface area and high three-dimensional bulk. The inner knit layer has an inner surface, towards a wearer's skin, brushed for increased surface area to provide enhanced absorption and reduced touching points upon the skin.

## Claims

1. A chemical protective fabric garment system (10), comprising:
a knit thermal fabric layer (20) formed of synthetic yarns or fibers with embedded particles of activated carbon, the knit thermal fabric layer (20) having at least one raised surface; and
an inner knit layer (22) formed of one or more yarns made of fibers carrying activated carbon particles and having an inner surface (21), for positioning towards a wearer's skin, brushed for increased surface area to provide enhanced absorption and reduced touching points upon the skin.

2. The chemical protective fabric garment system (10) of claim 1, wherein the inner knit layer (22) has a knitting construction selected from the group consisting of single jersey, plaited jersey, double knit, rib terry, and triple plaited terry.

3. The chemical protective fabric garment system (10) of claim 1 or claim 2, wherein the inner knit layer (22) has one or more properties selected from the group consisting of: good water management, good stretch recovery, and kindness to a wearer's skin.

4. The chemical protective fabric garment system (10) of any preceding claim, wherein the inner knit layer (22) is formed of materials with flame retarding properties.

5. The chemical protective fabric garment system (10) of claim 4, wherein the inner knit layer (22) has enhanced flame retarding properties provided, at least in part, by activated carbon particles embedded in fibers of the inner fabric layer (22).

6. The chemical protective fabric garment system (10) of any preceding claim, wherein the inner knit layer (22) has relatively high absorption performance for hazardous chemicals including in the form of gas, vapor, mist, or liquid.

7. The chemical protective fabric garment system (10) of any preceding claim, wherein the knit thermal fabric layer (20) includes fibers comprising synthetic material selected from the group consisting of: acrylic, acrylonitrile, nylon, and polyester.

8. The chemical protective fabric garment system (10) of any preceding claim, wherein the knit thermal fabric layer (20) is formed by a knitting process selected from the group consisting of: circular knit and warp knit.

9. The chemical protective fabric garment system of (10) any of claims 1 to 7, wherein the knit thermal fabric layer (20) is formed by the process of circular knitting and has a knitting construction selected from the group consisting of: terry, terry sliver knit in regular plaiting, terry sliver knit in reverse plaiting, and sliver knit.

10. The chemical protective fabric garment system (10) of any of claims 1 to 7, wherein the knit thermal fabric layer (20) has a knitting construction selected from the group consisting of regular plaiting and reverse plaiting, and one or both surfaces are physically brushed or raised by napping, brushing or sanding.

11. The chemical protective fabric garment system (10) of any preceding claim, wherein the knit thermal fabric layer (20) has one or both surfaces finished with fleece, velour or shearling.

12. The chemical protective fabric garment system (10) of any preceding claim, wherein the knit thermal fabric layer (20) is in stand-alone or laminated form.

13. The chemical protective fabric garment system (10) of any preceding claim, wherein the at least one raised surface of the knit thermal fabric layer (20) increases the relative surface area and high three-dimensional bulk of the at least one raised surface.

14. The chemical protective fabric garment system (10) of any preceding claim, wherein the knit thermal fabric layer (20) is single face or double face.

15. The chemical protective fabric garment system (10) of any preceding claim, wherein the knit thermal fabric layer (20) defines air flow paths of relatively high tortuosity, which, combined with Brownian movement of hazardous chemical molecules, ensures suitably high probability of contact by hazardous chemical molecules with activated carbon particles embedded in and upon fibers of the knit thermal fabric layer.

16. The chemical protective fabric garment system (10) of claim 15, wherein the activated carbon particles are embedded in and upon one or more of: stitch yarn, terry yarn and loop yarn of the knit thermal fabric layer.

17. The chemical protective fabric garment system (10) of any of claims 1 to 6, wherein the knit thermal fabric layer (20) further comprises elastomeric fibers in stitch yarn of regular plait and reverse plait constructions.

18. The chemical protective fabric garment system (10) of any of claims 1 to 7, wherein the knit thermal fabric layer (20) is formed by warp knit, with single face or double face knit or double needle bar construction.

19. The chemical protective fabric garment system (10) of any preceding claim, further comprising an outer protective fabric shell (12).

20. The chemical protective fabric garment system (10) of any preceding claim, wherein said inner knit layer also has an outer surface brushed for increased surface area and for increased tortuosity of said inner knit layer (22).

## Patentansprüche

1. Textiles Kleidungssystem zum Schutz gegen Chemikalien (10), umfassend
eine gewirkte thermische textile Schicht (20), die aus synthetischen Garnen oder Fasern mit eingebetteten Aktivkohleteilchen gebildet ist, wobei die gewirkte thermische textile Schicht (20) mindestens eine aufgeraute Oberfläche aufweist;
eine innere gewirkte Schicht (22), die aus einem oder mehreren Garnen aus Fasern, die Aktivkohleteilchen tragen, gebildet ist und eine innere Oberfläche (21) zur Positionierung in Richtung zur Haut des Trägers aufweist, die zur Erzielung einer vergrößerten Oberfläche gebürstet ist, um eine verstärkte Absorption und eine verringerte Anzahl an Berührungspunkten auf der Haut bereitzustellen.

2. Textiles Kleidungssystem zum Schutz gegen Chemikalien (10) nach Anspruch 1, wobei die innere gewirkte Schicht (22) eine Wirkkonstruktion aufweist, die aus der Gruppe ausgewählt ist, die besteht aus einfachem Jersey, plattiertem Jersey ("plaited jersey"), Doppel-Maschenware, Rippen-Frotteeware und dreifach plattierter Frotteeware.

3. Textiles Kleidungssystem zum Schutz gegen Chemikalien (10) nach Anspruch 1 oder 2, wobei die innere gewirkte Schicht (22) eine oder mehrere Eigenschaften aufweist, die aus der folgenden Gruppe ausgewählt sind: gute Wasserverwaltung, gute Elastizität und Hautfreundlichkeit.

4. Textiles Kleidungssystem zum Schutz gegen Chemikalien (10) nach einem der vorstehenden Ansprüche, wobei die innere gewirkte Schicht (22) aus Materialien mit flammhemmenden Eigenschaften gebildet ist.

5. Textiles Kleidungssystem zum Schutz gegen Chemikalien (10) nach Anspruch 4, wobei die innere gewirkte Schicht (22) erhöhte flammhemmende Eigenschaften aufweist, die mindestens teilweise durch in Fasern der inneren textilen Schicht (22) eingebettete Aktivkohleteilchen erreicht werden.

6. Textiles Kleidungssystem zum Schutz gegen Chemikalien (10) nach einem der vorstehenden Ansprüche, wobei die innere gewirkte Schicht (22) ein relativ hohes Absorptionsvermögen für gefährliche Chemikalien, einschließlich in Form von Gasen, Dampf, Nebel oder Flüssigkeit, aufweist.

7. Textiles Kleidungssystem zum Schutz gegen Chemikalien (10) nach einem der vorstehenden Ansprüche, wobei die gewirkte thermische textile Schicht (20) Fasern enthält, die synthetisches Material umfassen, das aus der Gruppe ausgewählt ist, die aus Acryl-, Acrylnitril-, Nylon- und Polyesterfasern besteht.

8. Textiles Kleidungssystem zum Schutz gegen Chemikalien (10) nach einem der vorstehenden Ansprüche, wobei die gewirkte thermische textile Schicht (20) durch ein Wirkverfahren gebildet worden ist, das aus der Gruppe ausgewählt ist, die aus Rundstricken und Kettenwirken ausgewählt ist.

9. Textiles Kleidungssystem zum Schutz gegen Chemikalien (10) nach einem der Ansprüche 1 bis 7, wobei die gewirkte thermische textile Schicht (20) durch ein Rundstrickverfahren gebildet ist und eine Wirkkonstruktion aufweist, die aus der Gruppe ausgewählt ist, die aus Frotteeware, Frottee-Lunten-Strickware ("terry sliver knit") mit normaler Plattierung, Frottee-Lunten-Strickware mit Umkehrplattierung und Lunten-Strickware.

10. Textiles Kleidungssystem zum Schutz gegen Chemikalien (10) nach einem der Ansprüche 1 bis 7, wobei die gewirkte thermische textile Schicht (20) eine Wirkkonstruktion aufweist, die aus der Gruppe ausgewählt ist, die besteht aus regelmäßiger Plattierung und umgekehrter Plattierung, wobei eine oder beide Oberflächen physikalisch durch Aufrauen, Bürsten oder Schleifen physikalisch gebürstet oder aufgeraut sind.

11. Textiles Kleidungssystem zum Schutz gegen Chemikalien (10) nach einem der vorstehenden Ansprüche, wobei bei der gewirkten thermischen textilen Schicht (20) eine oder beide Oberflächen mit Vlies, Velour oder Lammfell ausgerüstet sind.

12. Textiles Kleidungssystem zum Schutz gegen Chemikalien (10) nach einem der vorstehenden Ansprüche, wobei die gewirkte thermische textile Schicht (20) allein oder in laminierter Form vorliegt.

13. Textiles Kleidungssystem zum Schutz gegen Chemikalien (10) nach einem der vorstehenden Ansprüche, wobei die mindestens eine aufgeraute Oberfläche der gewirkten thermischen textilen Schicht (20) die relative Oberfläche und das hohe dreidimensionale Volumen der mindestens einen aufgerauten Oberfläche erhöht.

14. Textiles Kleidungssystem zum Schutz gegen Chemikalien (10) nach einem der vorstehenden Ansprüche, wobei die gewirkte thermische textile Schicht (20) einseitig oder doppelseitig ist.

15. Textiles Kleidungssystem zum Schutz gegen Chemikalien (10) nach einem der vorstehenden Ansprüche, wobei die gewirkte thermische textile Schicht (20) Luftströmungswege mit relativ starken Verwindungen definiert, die in Kombination mit der Brownschen Bewegung von gefährlichen chemischen Molekülen eine ausreichend hohe Wahrscheinlichkeit für einen Kontakt der gefährlichen chemischen Moleküle mit in und auf den Fasern der gewirkten thermischen textilen Schicht eingebetteten Aktivkohleteilchen gewährleistet.

16. Textiles Kleidungssystem zum Schutz gegen Chemikalien (10) nach Anspruch 15, wobei die Aktivkohlenteilchen in und auf einem oder mehreren der Bestandteile Maschengarn, Frotteegarn und Schlingengarn der gewirkten thermischem textilen Schicht (20) eingebettet sind.

17. Textiles Kleidungssystem zum Schutz gegen Chemikalien (10) nach einem der Ansprüche 1 bis 6, wobei die gewirkte thermische textile Schicht (20) ferner elastomere Fasern im Maschengarn mit normaler Plattierungs- und Umkehrplattierungskonstruktionen umfasst.

18. Textiles Kleidungssystem zum Schutz gegen Chemikalien (10) nach einem der Ansprüche 1 bis 7, wobei die gewirkte thermische textile Schicht (20) durch Kettenstrickkonstruktion, mit einseitiger oder doppelseitiger Strickkonstruktion oder Doppel-Nadelbarrenkonstruktion gebildet ist.

19. Textiles Kleidungssystem zum Schutz gegen Chemikalien (10) nach einem der vorstehenden Ansprüche, ferner umfassend einen äußeren textilen Schutzmantel (12).

20. Textiles Kleidungssystem zum Schutz gegen Chemikalien (10) nach einem der vorstehenden Ansprüche, wobei die innere gewirkte Schicht ebenfalls eine äußere Oberfläche aufweist, die zur Erzielung einer vergrößerten Oberfläche und einer verstärkten Verwindung der inneren gewirkten Schicht (22) gebürstet ist.

## Revendications

1. Système de vêtement en tissu de protection contre les produits chimiques (10), comprenant :
une couche de tricot thermique (20) constituée de fils ou de fibres synthétiques comportant des particules intégrées de charbon actif, la couche de tricot thermique (20) ayant au moins une surface grattée ; et
une couche de tricot intérieure (22) formée d'un ou plusieurs fils constitués de fibres portant des particules de charbon actif et ayant une surface interne (21) à placer du côté de la peau d'un porteur, brossée pour accroître la surface pour assurer une absorption accrue et une réduction des points de contact sur la peau.

2. Système de vêtement en tissu de protection contre les produits chimiques (10) selon la revendication 1, dans lequel la couche de tricot intérieure (22) a une construction tricotée choisie dans le groupe comprenant le jersey simple, le jersey tressé, le tricot double, l'éponge à côte et l'éponge tressée triple.

3. Système de vêtement en tissu de protection contre les produits chimiques (10) selon la revendication 1 ou la revendication 2, dans lequel la couche de tricot intérieure (22) présente une ou plusieurs propriétés choisies dans le groupe comprenant une bonne gestion de l'eau, une bonne récupération à l'étirement et un toucher doux sur la peau d'un porteur.

4. Système de vêtement en tissu de protection contre les produits chimiques (10) selon l'une quelconque des revendications précédentes, dans lequel la couche de tricot intérieure (22) est formée de matériaux présentant des propriétés ignifuges.

5. Système de vêtement en tissu de protection contre les produits chimiques (10) selon la revendication 4, dans lequel la couche de tricot intérieure (22) a des propriétés ignifuges améliorées constituées, au moins en partie, par des particules de charbon actif intégrées dans des fibres de la couche de tissu interne (22).

6. Système de vêtement en tissu de protection contre les produits chimiques (10) selon l'une quelconque des revendications précédentes, dans lequel la couche de tricot intérieure (22) présente des performances d'absorption élevées contre les produits chimiques dangereux, que ce soit sous forme de gaz, de vapeur, de buée ou de liquide.

7. Système de vêtement en tissu de protection contre les produits chimiques (10) selon l'une quelconque des revendications précédentes, dans lequel la couche de tricot thermique (20) comprend des fibres comprenant un matériau synthétique choisi dans le groupe comprenant l'acrylique, l'acrylonitrile, le nylon et le polyester.

8. Système de vêtement en tissu de protection contre les produits chimiques (10) selon l'une quelconque des revendications précédentes, dans lequel la couche de tricot thermique (20) est formée par un procédé de tricotage choisi dans le groupe comprenant le tricotage circulaire et le tricotage chaîne.

9. Système de vêtement en tissu de protection contre les produits chimiques (10) selon l'une quelconque des revendications 1 à 7, dans lequel la couche de tricot thermique (20) est formée par le procédé de tricotage circulaire et a une construction de tricot choisie dans le groupe comprenant l'éponge, le tricotage éponge avec ruban à tressage endroit, le tricot éponge avec ruban à tressage envers et le tricot à ruban.

10. Système de vêtement en tissu de protection contre les produits chimiques (10) selon l'une quelconque des revendications 1 à 7, dans lequel la couche de tricot thermique (20) a une construction de tricotage choisie dans le groupe comprenant le tressage endroit et le tressage envers et l'une des surfaces ou les deux sont physiquement brossées ou grattées par grattage, brossage ou abrasion.

11. Système de vêtement en tissu de protection contre les produits chimiques (10) selon l'une quelconque des revendications précédentes, dans lequel la couche de tricot thermique (20) présente une surface ou les deux qui ont une finition molleton, velours ou mouton.

12. Système de vêtement en tissu de protection contre les produits chimiques (10) selon l'une quelconque des revendications précédentes, dans lequel la couche de tricot thermique (20) se présente sous forme simple ou stratifiée.

13. Système de vêtement en tissu de protection contre les produits chimiques (10) selon l'une quelconque des revendications précédentes, dans lequel au moins une surface grattée de la couche de tricot thermique (20) augmente la surface relative et le gonflant tridimensionnel élevé d'au moins une surface grattée.

14. Système de vêtement en tissu de protection contre les produits chimiques (10) selon l'une des revendications précédentes, dans lequel la couche de tricot thermique (20) est à simple face ou à double face.

15. Système de vêtement en tissu de protection contre les produits chimiques (10) selon l'une quelconque des revendications précédentes, dans lequel la couche de tricot thermique (20) définit des voies d'écoulement d'air présentant une tortuosité relativement élevée qui, associées au mouvement brownien des molécules chimiques dangereuses, assurent une probabilité de contact élevée, de façon appropriée, par les molécules chimiques dangereuses avec les particules de charbon actif intégrées dans et sur les fibres de la couche de tricot thermique.

16. Système de vêtement en tissu de protection contre les produits chimiques (10) selon la revendication 15, dans lequel les particules de charbon actif sont intégrées dans et sur un ou plusieurs des fils de maille, fils tressés et fils bouclés de la couche de tricot thermique.

17. Système de vêtement en tissu de protection contre les produits chimiques (10) selon l'une quelconque des revendications 1 à 6, dans lequel la couche de tissu thermique (20) comprend en outre des fibres élastomères dans le fil à broder des constructions à tresses endroit et envers.

18. Système de vêtement en tissu de protection contre les produits chimiques (10) selon l'une quelconque des revendications 1 à 7, dans lequel la couche de tricot thermique (20) est formée d'une construction de tricotage chaîne avec construction à barre à aguilles simple face ou double face.

19. Système de vêtement en tissu de protection contre les produits chimiques (10) selon l'une quelconque des revendications précédentes, comprenant en outre une enveloppe de tissu protecteur externe (12).

20. Système de vêtement en tissu de protection contre les produits chimiques (10) selon l'une quelconque des revendications précédentes, dans lequel ladite couche de tricot intérieure a également une surface externe brossée pour accroître la surface et augmenter la tortuosité de ladite couche de tricot intérieure (22).
